(19)

Europäisches
Patentamt
European
Patent Office
Office européen
des brevets

(11) **EP 4 265 753 A1**

(12) **EUROPEAN PATENT APPLICATION**
published in accordance with Art. 153(4) EPC

(43) Date of publication:
**25.10.2023 Bulletin 2023/43**

(21) Application number: **21911376.8**

(22) Date of filing: **15.12.2021**

(51) International Patent Classification (IPC):
*C21D 9/46* (2006.01)      *C21D 8/04* (2006.01)
*C21D 8/02* (2006.01)      *C22C 38/02* (2006.01)
*C22C 38/04* (2006.01)      *C22C 38/06* (2006.01)
*C22C 38/00* (2006.01)      *C22C 38/42* (2006.01)

(52) Cooperative Patent Classification (CPC):
**C23C 2/00; C21D 8/02; C21D 8/04; C21D 9/46;
C22C 38/00; C22C 38/02; C22C 38/04;
C22C 38/06; C22C 38/42; C22C 38/44**

(86) International application number:
**PCT/KR2021/019101**

(87) International publication number:
**WO 2022/139309 (30.06.2022 Gazette 2022/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **21.12.2020 KR 20200179383**

(71) Applicant: **POSCO Co., Ltd
Pohang-si, Gyeongsangbuk-do 37859 (KR)**

(72) Inventors:
• **JO, Minho
  Pohang-si, Gyeongsangbuk-do 37859 (KR)**
• **HONG, Young-Kwang
  Pohang-si, Gyeongsangbuk-do 37859 (KR)**

(74) Representative: **Meissner Bolte Partnerschaft
mbB
Patentanwälte Rechtsanwälte
Postfach 86 06 24
81633 München (DE)**

(54) **COLD-ROLLED STEEL SHEET HAVING EXCELLENT PROCESSABILITY AND MANUFACTURING METHOD THEREOF**

(57)   A cold-rolled steel sheet having excellent processability according to an exemplary embodiment of the present invention contains, by wt%: 0.012 to 0.060% of C, 0.03% or less (excluding 0%) of Si, 0.1 to 0.4% of Mn, 0.015 to 0.050% of Al, 0.015% or less (excluding 0%) of P, 0.015% or less (excluding 0%) of S, 0.006% or less (excluding 0%) of N, and a balance of Fe and other unavoidable impurities.

EP 4 265 753 A1

**Description**

**[Technical Field]**

An exemplary embodiment of the present invention relates to a cold-rolled steel sheet having excellent processability and a method for manufacturing the same. More particularly, an exemplary embodiment of the present invention relates to a cold-rolled steel sheet that has excellent processability both before and after processing and is easily made into a part in an intermediate stage of processing, and a method for manufacturing the same.

**[Background Art]**

A cold-rolled steel sheet manufactured is used after being manufactured into a final structure through several stages of mechanical or thermal processing. In general, when the cold-rolled steel sheet undergoes mechanical processing, ductility is reduced and processability is thus deteriorated. Therefore, in many cases, the cold-rolled steel sheet is subjected to thermal processing at an intermediate stage after primary mechanical processing in order to improve processability again, and then a final shape is obtained through secondary mechanical processing. In this case, mechanical properties after mechanical processing and thermal processing as well as mechanical properties immediately after cold-rolled steel sheet manufacturing are important. Mainly, since ductility for primary mechanical processing is required immediately after cold-rolled steel sheet manufacturing, and ductility for secondary mechanical processing after thermal processing and final strength after mechanical processing should be secured, strength above a certain level is also required. In addition, a reduction in ductility may occur due to aging from thermal processing to final processing, and therefore, low aging characteristics above a certain level are also required to secure sufficient processability.

Various methods such as solid solution strengthening, precipitation strengthening, work hardening, and hard phase control have been used as a method for imparting strength to a steel sheet material to maintain a shape thereof during manufacture of a finished product. However, in order to sufficiently secure ductility after thermal processing, a strength imparting method suitable for thermal processing conditions should be used. Thermal processing is generally performed by controlling time and temperature, and the shorter the time and the lower the temperature, the easier it is to control and the more economical it is. Since recrystallization by heat is most effective in order to significantly recover ductility after mechanical processing, a steel sheet in which recrystallization occurs over a short period of time at a low temperature is suitable for thermal processing.

Among the above methods, solid solution strengthening is the simplest method to increase the strength, and is a method of adding an alloying element capable of solid solution. Solid solution strengthening may be effectively used to secure the strength of the final product because its effect is maintained even after thermal processing during processing. However, substitutional elements such as Mn and Si, which are generally used to obtain a desired effect, should be added in a large amount, and cause a reduction in economical efficiency, and interstitial elements such as C and N tend to deteriorate processability due to aging.

Work hardening is a phenomenon in which strength is increased by mechanical processing at room temperature. However, even when the strength is increased by work hardening, recrystallization occurs during thermal processing and most of the strength increase effect is lost, and thus, it cannot be used to increase strength of a final formed product. In addition, since ductility is greatly reduced during work hardening, it is difficult to actively use work hardening for a material requiring mechanical processability. In order to prevent a reduction in ductility, a method of performing annealing at a low temperature after work hardening for low carbon steel has been proposed. However, the main purpose of this method is simply to secure the initial strength and elongation. In order to obtain the desired physical properties after thermal processing during steel sheet processing, a correlation between the initial state of the steel sheet and changes in physical properties according to thermal processing conditions during processing should be closely examined.

Precipitation strengthening is a method for increasing strength through stable fine precipitates at a high temperature. However, since precipitates that are significantly stable at a high temperature interfere with recrystallization, a significantly high temperature or long time is required to cause recrystallization, which is not preferable. A method for manufacturing high-strength steel by finely precipitating TiN, NbC, and TiC using Ti and Nb having a high recrystallization temperature improvement effect, and performing recovery annealing has been proposed, but due to an increase in recrystallization temperature, equipment constraints in thermal processing are relatively high, resulting in low economical efficiency.

Hard phase control is a method for forming a metastable phase to a desired degree mainly through a high cooling rate during manufacture of a steel sheet. A method for securing a high strength of 800 MPa or more by using a hard phase has been proposed. This method is difficult to maintain during recrystallization, and in order to obtain a phase after recrystallization, precise control of the cooling rate during thermal processing is also required, and thus, this method is difficult to use for thermal processing applications. In addition, this method is mostly used for applications requiring a significantly high strength and a relatively low elongation, and thus, formability is significantly deteriorated.

Therefore, in order to manufacture a steel sheet having desired physical properties after mechanical and thermal processing, it is required to combine and use the characteristics of the strengthening methods.

**[Disclosure]**

**[Technical Problem]**

An exemplary embodiment of the present invention provides a cold-rolled steel sheet having excellent processability and a method for manufacturing the same. Another exemplary embodiment of the present invention provides a cold-rolled steel sheet that has excellent processability both before and after processing and is easily made into a part in an intermediate stage of processing, and a method for manufacturing the same.

**[Technical Solution]**

An exemplary embodiment of the present invention provides a cold-rolled steel sheet having excellent processability containing, by wt%: 0.012 to 0.060% of C, 0.03% or less (excluding 0%) of Si, 0.1 to 0.4% of Mn, 0.015 to 0.050% of Al, 0.015% or less (excluding 0%) of P, 0.015% or less (excluding 0%) of S, 0.006% or less (excluding 0%) of N, and a balance of Fe and other unavoidable impurities.

The cold-rolled steel sheet having excellent processability according to an exemplary embodiment of the present invention may have a reinforcement index defined by the following Expression 1 of 1.0 to 3.0.

[Expression 1]

$$\text{Reinforcement index} = [([C]/12.011) \times 6 + ([Mn]/54.938)] \times 100$$

(In Expression 1, each of [C] and [Mn] represents wt% of a content of each component.)

The cold-rolled steel sheet having excellent processability according to an exemplary embodiment of the present invention may have a grain aspect ratio defined by the following Expression 2 of 1.25 to 2.50.

[Expression 2]

$$\text{Grain aspect ratio} = (\text{Average grain diameter in rolling direction})/(\text{Average grain diameter in thickness direction})$$

The cold-rolled steel sheet having excellent processability according to an exemplary embodiment of the present invention may have a recrystallization area ratio of 3% or less.

The cold-rolled steel sheet having excellent processability according to an exemplary embodiment of the present invention may have an average grain diameter of 8 to 12 $\mu$m.

The cold-rolled steel sheet having excellent processability according to an exemplary embodiment of the present invention may further contain one or more of 0.003% or less of Cu, 0.01 wt% or less of Nb, 0.03 wt% or less of Sb, 0.03 wt% or less of Sn, 0.03 wt% or less of Ni, 0.03 wt% or less of Cr, 0.01 wt% or less of Ti, and 0.03 wt% or less of Mo.

The cold-rolled steel sheet having excellent processability according to an exemplary embodiment of the present invention may have a dislocation density of $2.5 \times 10^{15}/m^2$ or less.

Another exemplary embodiment of the present invention provides a plated steel sheet including a cold-rolled steel sheet and a plating layer located on one surface or both surfaces of the cold-rolled steel sheet.

Still another exemplary embodiment of the present invention provides a method for manufacturing a cold-rolled steel sheet having excellent processability, the method including: manufacturing a hot-rolled steel sheet by hot rolling a slab containing, by wt%: 0.012 to 0.060% of C, 0.03% or less (excluding 0%) of Si, 0.1 to 0.4% of Mn, 0.015 to 0.050% of Al, 0.015% or less (excluding 0%) of P, 0.015% or less (excluding 0%) of S, 0.006% or less (excluding 0%) of N, and a balance of Fe and other unavoidable impurities, and having a reinforcement index defined by the following Expression 1 of 1.0 to 3.0; manufacturing a hot-rolled steel sheet by hot rolling the slab; coiling the hot-rolled steel sheet at 600 to 700°C; manufacturing a cold-rolled steel sheet by cold rolling the coiled hot-rolled steel sheet at a reduction ratio of 20 to 60%; and annealing the cold-rolled steel sheet at a temperature of 400 to 580°C.

[Expression 1]

$$\text{Reinforcement index} = [([C]/12.011) \times 6 + ([Mn]/54.938)] \times 100$$

(In Expression 1, each of [C] and [Mn] represents wt% of a content of each component.)

The method for manufacturing a cold-rolled steel sheet having excellent processability may further include, before the manufacturing of the hot-rolled steel sheet, heating the slab at 1,150°C or higher.

In the manufacturing of the hot-rolled steel sheet, hot finish rolling may be performed at $Ar_3$ or higher.

The method for manufacturing a cold-rolled steel sheet having excellent processability may further include, after the annealing, rough-rolling the annealed sheet at a reduction ratio of 0.4 to 2.0%.

Still another exemplary embodiment of the present invention provides a method for manufacturing a plated steel sheet, the method including: manufacturing a cold-rolled steel sheet; and forming a plating layer on one surface or both surfaces of the cold-rolled steel sheet by hot-dip plating or electroplating.

[Advantageous Effect]

According to the present invention, it is possible to provide a cold-rolled steel sheet for processing that is easily subjected to additional mechanical processing because mechanical processing of the steel sheet itself is easy, ductility is further increased after thermal processing, and strength is appropriate.

[Mode for Invention]

The terms "first", "second", "third", and the like are used to describe various parts, components, regions, layers, and/or sections, but are not limited thereto. These terms are only used to differentiate a specific part, component, region, layer, or section from another part, component, region, layer, or section. Accordingly, a first part, component, region, layer, or section which will be described hereinafter may be referred to as a second part, component, region, layer, or section without departing from the scope of the present invention.

Terminologies used herein are to mention only a specific exemplary embodiment, and are not to limit the present invention. Singular forms used herein include plural forms as long as phrases do not clearly indicate an opposite meaning. The term "comprising" used in the specification concretely indicates specific properties, regions, integers, steps, operations, elements, and/or components, and is not to exclude the presence or addition of other specific properties, regions, integers, steps, operations, elements, and/or components.

In addition, unless otherwise stated, % means wt%, and 1 ppm is 0.0001 wt%.

In an exemplary embodiment of the present invention, the meaning of "further containing an additional element" means that the additional element is substituted for a balance of iron (Fe) by the amount of additional element added.

Unless defined otherwise, all terms including technical terms and scientific terms used herein have the same meanings as understood by those skilled in the art to which the present invention pertains. Terms defined in a generally used dictionary are additionally interpreted as having the meanings matched to the related technical document and the currently disclosed contents, and are not interpreted as ideal or very formal meanings unless otherwise defined.

Hereinafter, exemplary embodiments of the present invention will be described in detail so that those skilled in the art to which the present invention pertains may easily practice the present invention. However, the present invention may be implemented in various different forms and is not limited to exemplary embodiments described herein.

An exemplary embodiment of the present invention relates to a cold-rolled steel sheet used as various structural materials after being formed through mechanical and thermal processing, and the material for the application should not only have excellent initial processability, but also have strength above a certain level as a structural material while having additionally improved processability during thermal processing. To this end, it is required to satisfy the final physical properties while facilitating processing at each stage by simultaneously considering the initial physical properties of the material and changes in physical properties due to mechanical processing and thermal processing.

The present inventors have found that a cold-rolled steel sheet having the target physical properties may be manufactured by optimizing the type and content of alloying elements and manufacturing conditions in order to achieve the above object, thereby completing the present invention.

A cold-rolled steel sheet having excellent processability according to an exemplary embodiment of the present invention contains, by wt%: 0.012 to 0.060% of C, 0.03% or less (excluding 0%) of Si, 0.1 to 0.4% of Mn, 0.015 to 0.050% of Al, 0.015% or less (excluding 0%) of P, 0.015% or less (excluding 0%) of S, 0.006% or less (excluding 0%) of N, and a balance of Fe and other unavoidable impurities.

Hereinafter, first, a component composition of the cold-rolled steel sheet provided in an exemplary embodiment of the present invention will be described in detail. In this case, unless otherwise specified, a content of each component means wt%.

Carbon (C): 0.0120 to 0.0600 wt%

When a content of C is low, it is difficult to use a steel sheet as a structural material due to a low strength, and a refining process is additionally required to excessively reduce the content, which reduces productivity. Therefore, C may be contained in an amount of 0.012 wt% or more. C may effectively increase strength even with a small content, but when the content of C is excessive, processability may be greatly deteriorated. Therefore, an upper limit of C may be limited to 0.060 wt% or less. More specifically, C may be contained in an amount of 0.0035 wt% or less. Still more specifically, C may be contained in an amount of 0.0130 to 0.0550 wt%.

Silicon (Si): 0.03 wt% or less

Si is an element that may be used as a decarburizing agent, and may contribute to improving strength by solid solution strengthening, and therefore, it is difficult to completely exclude Si. However, when Si is excessive, Si-based oxides are produced on a surface of the steel sheet during annealing, which may cause defects during plating, resulting in deterioration of plating properties. Therefore, in consideration of this, an upper limit of Si may be limited to 0.03 wt% or less. More specifically, Si may be contained in an amount of 0.015 wt%. Still more specifically, Si may be contained in an amount of 0.005 to 0.015 wt%.

Manganese (Mn): 0.100 to 0.400 wt%

Mn is an element that prevents hot shortness caused by solid solution S by combining with solid solution S in steel to be precipitated as MnS. In order to obtain such an effect, Mn may be contained in an amount of 0.1 wt% or more. In addition, Mn is solid-solubilized into steel and has an effect of increasing the strength of the steel together with C. However, when Mn is excessive, the processability of the steel is deteriorated, and therefore, Mn may be limited to 0.4 wt% or less. More specifically, Mn may be contained in an amount of 0.150 to 0.390 wt%.

In an exemplary embodiment of the present invention, a correlation between the contents of C and Mn is important for securing strength and processability. It is found that desired strength and processability may be obtained when a reinforcement index defined by the following Relational Expression 1 as an index representing the reinforcement effect is 1.000 to 3.000.

[Expression 1]

$$\text{Reinforcement index} = [([C]/12.011) \times 6 + ([Mn]/54.938)] \times 100$$

(In Expression 1, each of [C] and [Mn] represents wt% of a content of each component.)

More specifically, the reinforcement index may be 1.500 to 2.700.

Aluminum (Al): 0.015 to 0.050 wt%

Al is an element having a significantly large deoxidizing effect and reacts with N in steel to precipitate AlN, thereby preventing deterioration of formability due to solid solution N. Therefore, Al may be contained in an amount of 0.015 wt% or more. However, when a large amount of Al is added, ductility is rapidly reduced, and therefore, the content of Al may be limited to 0.05 wt% or less. More specifically, Al may be contained in an amount of 0.020 to 0.048 wt%.

Phosphorus (P): 0.0150 wt% or less

P is an element capable of increasing the strength without significantly reducing the ductility of steel when P is added in a certain amount or less, but when P is added in excess of 0.015 wt%, P is segregated at a grain boundary to excessively harden the steel and reduce the elongation. Therefore, P may be limited to 0.015 wt% or less. More specifically, P may be contained in an amount of 0.015 wt% or less. Still more specifically, P may be contained in an amount of 0.0010 to 0.0100 wt%.

Sulfur (S): 0.0150 wt% or less

S is an element that induces hot shortness during solid solution, and therefore, precipitation of MnS should be induced through addition of Mn. In addition, excessive precipitation of MnS is not preferable in terms of softening of the steel in the present invention because it hardens the steel. Therefore, an upper limit of S may be limited to 0.015 wt%. More specifically, S may be contained in an amount of 0.0010 to 0.0100 wt%.

Nitrogen (N): 0.0060 wt% or less

N is contained as an unavoidable element in steel, but N present in a solid solution state causes aging, which greatly deteriorates processability. In order to minimize a reduction in ductility due to occurrence of aging, it is preferable to limit an upper limit of N to 0.0060 wt% or less. More specifically, N may be contained in an amount of 0.0035 wt% or less. Still more specifically, N may be contained in an amount of 0.0010 to 0.0050 wt%.

The cold-rolled steel sheet having excellent processability according to an exemplary embodiment of the present invention may further contain one or more of 0.003% or less of Cu, 0.01 wt% or less of Nb, 0.03 wt% or less of Sb, 0.03 wt% or less of Sn, 0.03 wt% or less of Ni, 0.03 wt% or less of Cr, and 0.03 wt% or less of Mo.

In addition to the above composition, it is preferable to contain a balance of Fe and unavoidable impurities, and the steel material of the present invention does not exclude addition of other compositions. The unavoidable impurities may be unintentionally incorporated from raw materials or the surrounding environment in a common steel manufacturing process and may not be excluded. The unavoidable impurities may be understood by those skilled in the common steel manufacturing field.

Hereinafter, properties of a texture of the cold-rolled steel sheet having excellent processability according to an exemplary embodiment of the present invention will be described in detail.

The cold-rolled steel sheet having excellent processability according to an exemplary embodiment of the present invention may have a grain aspect ratio defined by the following Expression 2 of 1.25 to 2.50.

[Expression 2]

$$\text{Grain aspect ratio} = \text{(Average grain diameter in rolling direction)}/\text{(Average grain diameter in thickness direction)}$$

The average grain diameter in the rolling direction (RD direction) may be calculated by dividing the number of grains present in a certain length by the number of grains present in the corresponding length. The average grain diameter in the thickness direction (ND direction) may also be calculated by dividing the number of grains present in a certain thickness of the steel sheet by the number of grains present in the corresponding thickness.

When the grain aspect ratio is too small, it is difficult to secure desired strength and recrystallization may be difficult during heat treatment because a driving force for recrystallization is small. When the grain aspect ratio is too large, a difference in processability in the rolling direction and the direction perpendicular to the rolling direction may be excessive, resulting in deterioration of formability. More specifically, the grain aspect ratio may be 1.30 to 2.00.

The cold-rolled steel sheet having excellent processability according to an exemplary embodiment of the present invention may have a dislocation density of $2.50 \times 10^{15}/m^2$ or less. The dislocation density may be measured by X-ray diffraction (XRD). When the dislocation density is too high, cracks may occur during processing. More specifically, the dislocation density may be $1.00$ to $2.00 \times 10^{15}/m^2$.

The cold-rolled steel sheet having excellent processability according to an exemplary embodiment of the present invention may have a recrystallization area ratio of 3% or less. In an exemplary embodiment of the present invention, recrystallization and non-recrystallization are distinguished through confirmation of new nucleation and grown grains from an elongated structure obtained by rolling through optical observation. The recrystallization area ratio may be measured based on a surface parallel to a rolled surface (ND surface) of the steel sheet. When the area ratio is too high, the strength is reduced and the recrystallized portion may not be recrystallized due to an insufficient recrystallization driving force after processing. More specifically, the recrystallization area ratio may be 2.5% or less.

The cold-rolled steel sheet having excellent processability according to an exemplary embodiment of the present invention may have an average grain diameter of 8.0 to 12.0 $\mu$m. The average grain diameter is too small, the strength is too high. When the average grain diameter is too large, a local material variation is large, which may cause defects during processing. The average grain diameter may be measured based on a surface parallel to the rolled surface (ND surface), and may be determined by measuring a diameter of a circle having the same area as the grain. More specifically, the average grain diameter may be 8.3 to 11.5 $\mu$m.

As described above, the cold-rolled steel sheet according to an exemplary embodiment of the present invention has both excellent strength and processability, and also has both excellent strength and processability even after processing. Specifically, before processing, a yield strength may be 650.0 MPa or less, and an elongation may be 7.0% or more. More specifically, before processing, the yield strength may be 450.0 to 650.0 MPa, and the elongation may be 7.5 to 12.0%.

After processing, a yield strength may be 180.0 MPa or more, and an elongation may be 25.0% or more. More specifically, after processing, the yield strength may be 180.0 to 250.0 MPa, and the elongation may be 25.0 to 35.0%. In this case, the processing may be processing in which the temperature of the cold-rolled steel sheet is rapidly raised to 740°C at a rate of 50°C/sec after mechanical processing for 20% elongation, and then the cold-rolled steel sheet is slowly cooled to 25°C at -5°C/sec.

A plated steel sheet according to an exemplary embodiment of the present invention includes a cold-rolled steel sheet and a plating layer located on one surface or both surfaces of the cold-rolled steel sheet.

A method for manufacturing a cold-rolled steel sheet having excellent processability according to an exemplary embodiment of the present invention includes: manufacturing a hot-rolled steel sheet by hot rolling a slab; coiling the hot-rolled steel sheet; manufacturing a cold-rolled steel sheet by cold rolling the hot-rolled steel sheet; and annealing the cold-rolled steel sheet.

Hereinafter, each step will be described in detail.

First, a hot-rolled steel sheet is manufactured by hot rolling a slab.

Since an alloy composition of the slab is the same as that of the cold-rolled steel sheet described above, overlapping descriptions will be omitted. Alloy components are not substantially changed in the manufacturing process of the cold-rolled steel sheet, and therefore, the alloy compositions of the slab and the cold-rolled steel sheet are substantially the same as each other.

The slab may be reheated to a temperature of 1,150°C or higher before hot rolling. Since most of precipitates present in the steel should be re-dissolved, a temperature of 1,150°C or higher may be required. More specifically, the slab may be heated to 1,200°C or higher in order to dissolve the precipitates well.

A hot-rolled steel sheet is manufactured by hot finish rolling the slowly cooled slab at a temperature of $Ar_3$ or higher. The hot finish rolling temperature is limited to $Ar_3$ or higher in order to perform rolling in an austenite single-phase region.

The $Ar_3$ temperature may be calculated by the following expression.

$$Ar_3 = 910 - (310 \times [C]) - (80 \times [Mn]) - (20 \times [Cu]) - (15 \times [Cr]) - (55 \times [Ni]) - (80 \times [Mo]) - (0.35 \times (25.4 - 8))$$

[C], [Mn], [Cu], [Cr], [Ni], and [Mo] are contents (wt%) of C, Mn, Cu, Cr, Ni, and Mo in the steel sheet, respectively. When the element is not contained, it is calculated as 0.

More specifically, the finish rolling temperature may be 900°C or higher.

The hot-rolled steel sheet is coiled at 600 to 700°C. The grain size of the hot-rolled steel sheet changes depending on a coiling temperature. When the coiling temperature is low, grains are fine, and when the coiling temperature is high, coarse grains are formed. In the present invention, the grain size of the hot-rolled steel sheet is important. Since complete recrystallization does not occur in the annealing process after cold rolling in the present invention, the grain size of the hot-rolled steel sheet directly affects physical properties of the final steel sheet. In order to obtain desired processability and strength of the steel sheet, it is preferable to control the coiling temperature of the hot-rolled steel sheet to 600.0 to 700.0°C. More specifically, the coiling temperature may be 610.0 to 690.0°C.

Next, the hot-rolled steel sheet is cold-rolled.

In this case, a cold-rolled steel sheet is manufactured by cold rolling the hot-rolled steel sheet at a reduction ratio of 20.0 to 60.0%. The reduction ratio not only may determine the final thickness of the cold-rolled steel sheet, but also may increase the strength of the steel sheet by work hardening during cold rolling. A cold reduction ratio of 20% or more is required to obtain a desired strength. However, when the reduction ratio is excessively high, processing is difficult due to high strength, or recrystallization is promoted during annealing, resulting in a significant reduction in strength. In order to prevent recrystallization, the annealing temperature needs to be further lowered, but when the annealing temperature is excessively lower than a common annealing temperature of a steel sheet, a difference in annealing temperature between the steel sheets increases when manufacturing various types of steel sheets, which causes a reduction in productivity. In consideration of this, an upper limit of the reduction ratio is preferably controlled to 60% or less. More specifically, the reduction ratio may be controlled to 35.0 to 56.0%.

Next, the cold-rolled steel sheet is annealed at a temperature of 400.0 to 580.0°C. In an exemplary embodiment of the present invention, the annealing temperature is lower than a common recrystallization annealing temperature, and corresponds to a recovery annealing temperature for partially removing dislocations accumulated in the steel during cold rolling. This is to improve the elongation by removing a considerable amount of dislocations accumulated during cold rolling through recovery. When the annealing temperature is lower than 400°C, dislocations generated during cold rolling do not sufficiently disappear, resulting in a reduction in ductility, and when the annealing temperature exceeds 580°C, recrystallization occurs, and the strength is greatly reduced. More specifically, the annealing temperature may be 430.0 to 575.0°C.

Thereafter, a plated steel sheet may be manufactured by forming a plating layer on one surface or both surfaces of the cold-rolled steel sheet by hot-dip plating or electroplating.

Hereinafter, the present invention will be described in more detail with reference to Examples. However, these Examples are only for illustrating the present invention, and the present invention is not limited thereto.

Examples

Steel having the compositions shown in Table 1 was manufactured, and the components were indicated by performance values. Steel slabs having the composition shown in Table 1 and containing a balance of Fe and unavoidable impurities were prepared.

[Table 1]

| | Component (wt%) | | | | | | |
|---|---|---|---|---|---|---|---|
| | C | Si | Mn | Al | P | S | N |
| Comparative Steel 1 | 0.0101 | 0.014 | 0.165 | 0.035 | 0.0060 | 0.0077 | 0.0023 |
| Inventive Steel 1 | 0.0131 | 0.011 | 0.200 | 0.044 | 0.0078 | 0.0074 | 0.0023 |
| Inventive Steel 2 | 0.0250 | 0.011 | 0.193 | 0.042 | 0.0063 | 0.0077 | 0.0023 |
| Inventive Steel 3 | 0.0420 | 0.006 | 0.212 | 0.047 | 0.0079 | 0.0064 | 0.0034 |
| Inventive Steel 4 | 0.0520 | 0.010 | 0.211 | 0.050 | 0.0066 | 0.0074 | 0.0033 |
| Comparative Steel 2 | 0.0620 | 0.008 | 0.206 | 0.031 | 0.0061 | 0.0077 | 0.0036 |
| Comparative Steel 3 | 0.0156 | 0.013 | 0.050 | 0.044 | 0.0072 | 0.0070 | 0.0034 |
| Inventive Steel 5 | 0.0404 | 0.011 | 0.142 | 0.043 | 0.0066 | 0.0069 | 0.0032 |
| Inventive Steel 6 | 0.0371 | 0.010 | 0.256 | 0.029 | 0.0079 | 0.0066 | 0.0028 |
| Inventive Steel 7 | 0.0404 | 0.009 | 0.389 | 0.041 | 0.0063 | 0.0070 | 0.0026 |
| Comparative Steel 4 | 0.0450 | 0.009 | 0.450 | 0.035 | 0.0079 | 0.0071 | 0.0029 |
| Inventive Steel 8 | 0.0376 | 0.008 | 0.208 | 0.031 | 0.0078 | 0.0072 | 0.0051 |
| Comparative Steel 5 | 0.0385 | 0.015 | 0.204 | 0.040 | 0.0069 | 0.0064 | 0.0068 |
| Comparative Steel 6 | 0.0131 | 0.012 | 0.120 | 0.024 | 0.0074 | 0.0070 | 0.0036 |
| Comparative Steel 7 | 0.0115 | 0.009 | 0.126 | 0.047 | 0.0075 | 0.0065 | 0.0025 |
| Comparative Steel 8 | 0.0520 | 0.013 | 0.250 | 0.022 | 0.0075 | 0.0061 | 0.0023 |
| Comparative Steel 9 | 0.0480 | 0.010 | 0.380 | 0.030 | 0.0072 | 0.0075 | 0.0028 |
| Comparative Steel 10 | 0.0385 | 0.015 | 0.199 | 0.027 | 0.0069 | 0.0066 | 0.0022 |
| Inventive Steel 9 | 0.0407 | 0.006 | 0.219 | 0.027 | 0.0079 | 0.0078 | 0.0039 |
| Inventive Steel 10 | 0.0439 | 0.014 | 0.207 | 0.027 | 0.0062 | 0.0072 | 0.0039 |
| Comparative Steel 11 | 0.0448 | 0.011 | 0.200 | 0.024 | 0.0062 | 0.0066 | 0.0037 |
| Comparative Steel 12 | 0.0424 | 0.014 | 0.203 | 0.022 | 0.0073 | 0.0060 | 0.0030 |
| Inventive Steel 11 | 0.0369 | 0.011 | 0.220 | 0.048 | 0.0061 | 0.0066 | 0.0031 |
| Inventive Steel 12 | 0.0370 | 0.014 | 0.201 | 0.022 | 0.0078 | 0.0067 | 0.0031 |
| Comparative Steel 13 | 0.0418 | 0.014 | 0.205 | 0.039 | 0.0080 | 0.0079 | 0.0024 |
| Comparative Steel 14 | 0.0361 | 0.011 | 0.211 | 0.039 | 0.0079 | 0.0065 | 0.0034 |
| Inventive Steel 13 | 0.0395 | 0.007 | 0.188 | 0.048 | 0.0067 | 0.0080 | 0.0023 |

(continued)

| | Component (wt%) | | | | | | |
|---|---|---|---|---|---|---|---|
| | C | Si | Mn | Al | P | S | N |
| Inventive Steel 14 | 0.0449 | 0.012 | 0.186 | 0.044 | 0.0074 | 0.0078 | 0.0035 |
| Comparative Steel 15 | 0.0442 | 0.012 | 0.207 | 0.035 | 0.0071 | 0.0070 | 0.0020 |

The slab was reheated to 1,230°C and hot-rolled at 900°C or higher, and coiling, cold rolling, and annealing were performed according to the manufacturing conditions shown in Table 2, thereby obtaining an annealed steel sheet having a thickness of 1 mm. At this time, the annealing was performed in a coil state through a continuous annealing method, the temperature was raised to the corresponding temperature, the temperature was maintained for 1 minute, and then the steel sheet was cooled to room temperature. In Comparative Steel 3, since cracks occurred during hot rolling, cold rolling and annealing were not performed, and therefore, subsequent measurement of physical properties was omitted.

[Table 2]

| Classification | Coiling temperature (°C) | Cold reduction ratio (%) | Annealing temperature (°C) |
|---|---|---|---|
| Comparative Steel 1 | 654.3 | 40.6 | 543.5 |
| Inventive Steel 1 | 650.9 | 40.1 | 542.8 |
| Inventive Steel 2 | 652.9 | 40.3 | 536.1 |
| Inventive Steel 3 | 652.9 | 40.9 | 545.0 |
| Inventive Steel 4 | 653.1 | 40.7 | 533.2 |
| Comparative Steel 2 | 649.3 | 40.6 | 531.0 |
| Comparative Steel 3 | 651.1 | - | - |
| Inventive Steel 5 | 646.3 | 40.8 | 543.1 |
| Inventive Steel 6 | 652.7 | 40.2 | 546.4 |
| Inventive Steel 7 | 648.4 | 40.5 | 540.3 |
| Comparative Steel 4 | 647.8 | 40.0 | 543.2 |
| Inventive Steel 8 | 650.5 | 39.3 | 540.9 |
| Comparative Steel 5 | 647.8 | 39.1 | 549.6 |
| Comparative Steel 6 | 651.6 | 40.1 | 546.5 |
| Comparative Steel 7 | 654.9 | 39.9 | 545.3 |
| Comparative Steel 8 | 649.9 | 39.5 | 536.7 |
| Comparative Steel 9 | 651.3 | 38.5 | 539.6 |
| Comparative Steel 10 | 580.2 | 40.0 | 545.0 |
| Inventive Steel 9 | 611.5 | 40.2 | 546.6 |
| Inventive Steel 10 | 689.8 | 39.9 | 530.6 |
| Comparative Steel 11 | 720.4 | 40.3 | 537.6 |
| Comparative Steel 12 | 653.6 | 16.8 | 535.3 |
| Inventive Steel 11 | 650.7 | 24.4 | 530.8 |
| Inventive Steel 12 | 645.0 | 55.4 | 530.8 |
| Comparative Steel 13 | 651.3 | 60.5 | 535.3 |
| Comparative Steel 14 | 650.0 | 40.8 | 385.1 |
| Inventive Steel 13 | 654.4 | 40.4 | 431.5 |

(continued)

| Classification | Coiling temperature (°C) | Cold reduction ratio (%) | Annealing temperature (°C) |
|---|---|---|---|
| Inventive Steel 14 | 650.9 | 39.6 | 572.5 |
| Comparative Steel 15 | 652.4 | 39.4 | 590.8 |

The reinforcement index, grain aspect ratio, dislocation density, recrystallization area ratio, and average grain diameter of the manufactured annealing steel sheet were measured and calculated. The results thereof are shown in Table 3. The reinforcement index was defined as in the following Relational Expression 1, and was calculated and expressed from the components of the steel. In addition, the average grain diameter was measured by optical microstructure observation, and the recrystallization area ratio was also expressed by measuring the area of the recrystallized grains. The grain aspect ratio defined by the following Relational Expression 2 was statistically calculated from optical microstructure observation, and the dislocation density was measured through X-ray diffraction (XRD) and expressed.

[Expression 1]

$$\text{Reinforcement index} = [([C]/12.011) \times 6 + ([Mn]/54.938)] \times 100$$

(In Expression 1, each of [C] and [Mn] represents wt% of a content of each component.)

[Expression 2]

$$\text{Grain aspect ratio} = (\text{Average grain diameter in rolling direction})/(\text{Average}$$

$$\text{grain diameter in thickness direction})$$

[Table 3]

| Classification | Reinforcement index (Relational Expression 1) | Grain aspect ratio (Relational Expression 2) | Dislocation density (X10$^{15}$/m$^2$) | Recrystallizat ion area ratio (area%) | Average grain diameter ($\mu$m) |
|---|---|---|---|---|---|
| Comparative Steel 1 | 0.805 | 1.60 | 1.17 | 0 | 11.8 |
| Inventive Steel 1 | 1.018 | 1.76 | 1.33 | 0 | 11.3 |
| Inventive Steel 2 | 1.601 | 1.60 | 1.20 | 0 | 10.2 |
| Inventive Steel 3 | 2.483 | 1.68 | 1.43 | 0 | 10.0 |
| Inventive Steel 4 | 2.982 | 1.72 | 1.45 | 0 | 9.1 |
| Comparative Steel 2 | 3.472 | 1.62 | 1.47 | 0 | 8.8 |
| Comparative Steel 3 | - | - | - | - | - |
| Inventive Steel 5 | 2.277 | 1.71 | 1.32 | 0 | 9.1 |
| Inventive Steel 6 | 2.317 | 1.74 | 1.32 | 0 | 8.5 |

(continued)

| Classification | Reinforcement index (Relational Expression 1) | Grain aspect ratio (Relational Expression 2) | Dislocation density (X10$^{15}$/m$^2$) | Recrystallizat ion area ratio (area%) | Average grain diameter ($\mu$m) |
|---|---|---|---|---|---|
| Inventive Steel 7 | 2.724 | 1.62 | 1.49 | 0 | 8.6 |
| Comparative Steel 4 | 3.067 | 1.65 | 1.40 | 0 | 8.1 |
| Inventive Steel 8 | 2.257 | 1.63 | 1.13 | 0 | 10.3 |
| Comparative Steel 5 | 2.293 | 1.76 | 1.37 | 0 | 9.2 |
| Comparative Steel 6 | 0.873 | 1.57 | 1.43 | 0 | 11.2 |
| Comparative Steel 7 | 0.803 | 1.68 | 1.31 | 0 | 11.4 |
| Comparative Steel 8 | 3.053 | 1.72 | 1.29 | 0 | 8.3 |
| Comparative Steel 9 | 3.089 | 1.68 | 1.42 | 0 | 8.4 |
| Comparative Steel 10 | 2.287 | 1.73 | 1.13 | 0 | 7.8 |
| Inventive Steel 9 | 2.431 | 1.72 | 1.26 | 0 | 8.3 |
| Inventive Steel 10 | 2.571 | 1.69 | 1.32 | 0 | 11.5 |
| Comparative Steel 11 | 2.605 | 1.58 | 1.23 | 0 | 13.7 |
| Comparative Steel 12 | 2.485 | 1.21 | 0.65 | 0 | 10.6 |
| Inventive Steel 11 | 2.242 | 1.32 | 1.18 | 0 | 9.0 |
| Inventive Steel 12 | 2.213 | 2.31 | 1.11 | 2.5 | 8.5 |
| Comparative Steel 13 | 2.462 | 2.58 | 2.80 | 3.6 | 8.1 |
| Comparative Steel 14 | 2.186 | 1.68 | 1.15 | 0 | 7.8 |
| Inventive Steel 13 | 2.317 | 1.64 | 1.37 | 0 | 10.2 |
| Inventive Steel 14 | 2.580 | 1.59 | 1.17 | 1.6 | 10.3 |
| Comparative Steel 15 | 2.586 | 1.52 | 1.39 | 6.8 | 10.6 |

In Table 4, the measured yield strength and elongation of the material were shown, and the yield strength and elongation after processing measured to confirm the changes in physical properties after mechanical processing and thermal processing were also shown. In the processing, mechanical processing for 20% elongation at room temperature was performed, and then thermal processing, in which the temperature of the steel sheet was rapidly raised to 740°C at a rate of 50°C/sec and then the steel sheet was slowly cooled to 25°C at -5°C/sec, was sequentially performed. The physical properties were measured during the mechanical processing, and thermal processing was not performed when the yield strength and elongation did not satisfy the standards. The physical properties after thermal processing were measured one month after the processing to consider the aging effect due to passage of time before use due to transportation and storage of parts.

[Table 4]

| Classification | Mechanical properties of annealed steel sheet | | Mechanical properties after processing | |
|---|---|---|---|---|
| | Yield strength (MPa) | Elongation (%) | Yield strength (MPa) | Elongation (%) |
| Comparative Steel 1 | 441.5 | 12.8 | 174.1 | 33.6 |
| Inventive Steel 1 | 466.8 | 10.5 | 186.5 | 31.5 |
| Inventive Steel 2 | 492.2 | 8.8 | 216.5 | 28.2 |
| Inventive Steel 3 | 562.7 | 8.5 | 223.3 | 28.3 |
| Inventive Steel 4 | 640.5 | 7.6 | 232.2 | 26.1 |
| Comparative Steel 2 | 672.5 | 6.5 | - | - |
| Comparative Steel 3 | - | - | - | - |
| Inventive Steel 5 | 520.5 | 8.9 | 186.9 | 29.0 |
| Inventive Steel 6 | 560.5 | 8.6 | 218.0 | 27.3 |
| Inventive Steel 7 | 632.0 | 7.5 | 227.9 | 28.6 |
| Comparative Steel 4 | 665.3 | 6.4 | - | - |
| Inventive Steel 8 | 538.9 | 8.2 | 235.5 | 26.5 |
| Comparative Steel 5 | 534.4 | 9.4 | 272.1 | 22.1 |
| Comparative Steel 6 | 431.3 | 10.9 | 168.5 | 34.5 |
| Comparative Steel 7 | 435.5 | 11 | 172.0 | 33.6 |
| Comparative Steel 8 | 670.5 | 6.8 | - | - |
| Comparative Steel 9 | 668.8 | 6.5 | - | - |
| Comparative Steel 10 | 638.5 | 7.3 | 265.5 | 24.8 |
| Inventive Steel 9 | 625.0 | 7.8 | 240.0 | 26.8 |
| Inventive Steel 10 | 505.5 | 9.5 | 218.2 | 27.5 |
| Comparative Steel 11 | 490.5 | 11.5 | 385.6 | 16.5 |
| Comparative Steel 12 | 449.6 | 8.4 | 480.6 | 13.5 |
| Inventive Steel 11 | 495.5 | 8.3 | 210.3 | 29.6 |
| Inventive Steel 12 | 521.1 | 8.4 | 232.5 | 25.8 |
| Comparative Steel 13 | 485.5 | 13.5 | 285.5 | 19.6 |
| Comparative Steel 14 | 600.1 | 6.5 | - | - |
| Inventive Steel 13 | 535.1 | 7.6 | 219.2 | 26.9 |
| Inventive Steel 14 | 530.5 | 11.5 | 199.9 | 30.0 |
| Comparative Steel 15 | 380.6 | 16.8 | 371.5 | 18.9 |

Inventive Steels 1 to 14 shown in Table 4 were suitable for mechanical processing into structural materials because the reinforcement index, grain aspect ratio, dislocation density, recrystallization area ratio, and grain diameter were appropriately satisfied, the yield strength was 650 MPa or less, and the elongation was 7% or more. In addition, all the inventive steels had a yield strength of 180 MPa or more and an elongation of 25% or more after mechanical and thermal processing described above. An elongation of less than 25% is unsuitable for complex forming, and a yield strength of less than 180 MPa is unsuitable for maintaining the shape as a structural material.

In Comparative Steel 1, the content of C was less than 0.012 wt%, and the reinforcement index was less than 1.0. Accordingly, the yield strength after processing was less than 180 MPa, which was unsuitable. On the other hand, in Comparative Steel 2, the content of C exceeded 0.060 wt%, and the reinforcement index exceeded 3.0. Accordingly, the yield strength of the annealed steel sheet exceeded 650 MPa, and the elongation was less than 7%, and thus, the formation was difficult as described above.

In Comparative Steel 3, the content of Mn was less than 0.1 wt%, and cracks occurred in the hot-rolled steel sheet due to brittleness caused by S during hot rolling. When S in the steel was combined with Mn and sufficiently precipitated in the form of MnS, brittleness was suppressed, and when Mn was not sufficient, brittleness strongly appeared. In Comparative Steel 4, Mn exceeded 0.4 wt%, the reinforcement index exceeded 3.0, the yield strength exceeded 650 MPa, and the elongation was less than 7%, which was low.

In Comparative Steel 5, the content of N exceeded 0.006 wt%, and accordingly, the physical properties before processing were excellent, and the yield strength after processing was 180 MPa or more, which was excellent, but the elongation was less than 25%, which was low, due to aging caused by N.

In Comparative Steels 6 and 7, the reinforcement index was less than 1.0, and the yield strength after processing was less than 180 MPa, which was low, and as a result, it was difficult to maintain the shape. On the other hand, in Comparative Steels 8 and 9, it could be confirmed that the reinforcement index exceeded 3.0, the strength of the annealed steel sheet exceeded 650 M, and the elongation was less than 7%, which was low.

In Comparative Steel 10, the coiling temperature was lower than 600°C, and the grain size was 7.8 $\mu$m, which was small, due to a low coiling temperature. In this case, since grains formed in the recrystallization process during thermal processing after mechanical processing were also small, the strength was sufficiently high, but the elongation was 25% or less, which was low, and as a result, the steel was unsuitable.

On the other hand, in Comparative Steel 11, as the coiling temperature exceeded 700°C, the gain size was 13.7 $\mu$m, which was significantly large. When the grain was large, recrystallization did not easily occur even when thermally processed. Accordingly, the mechanical processing stress was not sufficiently relieved, and the strength was significantly high, but the elongation was less than 20%, which was significantly reduced, and thus, it was difficult to use the steel.

In Comparative Steel 12, the cold reduction ratio was less than 20%, which was low, and the grain aspect ratio was lower than 1.25, which was low. When the cold reduction ratio was low, the initial strength was low and the elongation was high, which was advantageous for mechanical processing. However, as sufficient recrystallization did not occur during thermal processing, the elongation after processing was 15% or less, which was low, and thus, the steel was unsuitable for use.

On the other hand, in Comparative Steel 13, the cold reduction ratio exceeded 60%, which was high, the grain aspect ratio exceeded 2.5, and the dislocation density exceeded $2.5 \times 10^{15}$/m$^2$. As such, when the recrystallization driving force was high, recrystallization partially occurred during annealing of the cold-rolled steel sheet, and as a result, the recrystallization area ratio exceeded 3%. Since most of the stress was relieved in the portion where the recrystallized grains were formed after annealing of the cold-rolled steel sheet, the recrystallization driving force for recrystallization to occur was relatively low even after mechanical processing and thermal processing. It could be confirmed that the elongation was lowered to less than 20% as recrystallization did not sufficiently occur after thermal processing due to these causes.

In Comparative Steel 14, as the annealing temperature of the cold-rolled steel sheet was lower than 400°C, sufficient recovery did not occur and the grain diameter was small. Accordingly, the elongation after annealing was less than 7%, which was low, and thus, the processability was deteriorated. On the other hand, in Comparative Steel 15, the annealing temperature exceeded 580°C, recrystallization partially occurred actively, and the recrystallization area ratio exceeded 3%. Accordingly, as described above, it could be confirmed that, in the portion where recrystallization occurred, even though mechanical processing was performed, the recrystallization driving force was not sufficient, and recrystallization did not occur after thermal processing, and thus, the elongation was 20% or less, which was low.

The present invention is not limited to the exemplary embodiments, but may be manufactured in various different forms, and it will be apparent to those skilled in the art to which the present invention pertains that various modifications and alterations may be made without departing from the spirit or essential feature of the present invention. Therefore, it is to be understood that the exemplary embodiments described hereinabove are illustrative rather than restrictive in all aspects.

**Claims**

1.  A cold-rolled steel sheet having excellent processability comprising, by wt%: 0.012 to 0.060% of C, 0.03% or less (excluding 0%) of Si, 0.1 to 0.4% of Mn, 0.015 to 0.050% of Al, 0.015% or less (excluding 0%) of P, 0.015% or less (excluding 0%) of S, 0.006% or less (excluding 0%) of N, and a balance of Fe and other unavoidable impurities,

    wherein a reinforcement index defined by the following Expression 1 is 1.0 to 3.0,
    a grain aspect ratio defined by the following Expression 2 is 1.25 to 2.50,
    a recrystallization area ratio is 3% or less, and
    an average grain diameter is 8 to 12 $\mu$m:

    [Expression 1]

    Reinforcement index = [([C]/12.011)× 6 + ([Mn]/54.938)] × 100

    (in Expression 1, each of [C] and [Mn] represents wt% of a content of each component),

    [Expression 2]

    Grain aspect ratio = (Average grain diameter in rolling direction)/(Average

    grain diameter in thickness direction).

2.  The cold-rolled steel sheet of claim 1, further comprising one or more of 0.003% or less of Cu, 0.01 wt% or less of Nb, 0.03 wt% or less of Sb, 0.03 wt% or less of Sn, 0.03 wt% or less of Ni, 0.03 wt% or less of Cr, and 0.03 wt% or less of Mo.

3.  The cold-rolled steel sheet of claim 1, wherein:
    a dislocation density is $2.5 \times 10^{15}/m^2$ or less.

4.  A plated steel sheet comprising:

    the cold-rolled steel sheet of claim 1; and
    a plating layer located on one surface or both surfaces of the cold-rolled steel sheet.

5.  A method for manufacturing a cold-rolled steel sheet having excellent processability, the method comprising:

    manufacturing a hot-rolled steel sheet by hot rolling a slab containing, by wt%, 0.012 to 0.060% of C, 0.03% or less (excluding 0%) of Si, 0.1 to 0.4% of Mn, 0.015 to 0.050% of Al, 0.015% or less (excluding 0%) of P, 0.015% or less (excluding 0%) of S, 0.006% or less (excluding 0%) of N, and a balance of Fe and other unavoidable impurities, and having a reinforcement index defined by the following Expression 1 of 1.0 to 3.0;
    manufacturing a hot-rolled steel sheet by hot finish rolling the slab at Ar3 or higher;
    coiling the hot-rolled steel sheet at 600 to 700°C;
    manufacturing a cold-rolled steel sheet by cold rolling the coiled hot-rolled steel sheet at a reduction ratio of 20 to 60%; and
    annealing the cold-rolled steel sheet at a temperature of 400 to 580°C:

    [Expression 1]

    Reinforcement index = [([C]/12.011)× 6 + ([Mn]/54.938)] × 100

    (in Expression 1, each of [C] and [Mn] represents wt% of a content of each component).

6.  The method of claim 5, further comprising, before the manufacturing of the hot-rolled steel sheet, heating the slab at 1,150°C or higher.

7. The method of claim 5, wherein:
in the manufacturing of the hot-rolled steel sheet, hot finish rolling is performed at $Ar_3$ or higher.

8. The method of claim 5, further comprising, after the annealing, rough-rolling the annealed sheet at a reduction ratio of 0.4 to 2.0%.

9. A method for manufacturing a plated steel sheet, the method comprising:

manufacturing a cold-rolled steel sheet by the method of claim 5; and
forming a plating layer on one surface or both surfaces of the cold-rolled steel sheet by hot-dip plating or electroplating.

## INTERNATIONAL SEARCH REPORT

| International application No. |
|---|
| **PCT/KR2021/019101** |

**A.    CLASSIFICATION OF SUBJECT MATTER**

**C21D 9/46**(2006.01)i; **C21D 8/04**(2006.01)i; **C21D 8/02**(2006.01)i; **C22C 38/02**(2006.01)i; **C22C 38/04**(2006.01)i; **C22C 38/06**(2006.01)i; **C22C 38/00**(2006.01)i; **C22C 38/42**(2006.01)i

According to International Patent Classification (IPC) or to both national classification and IPC

**B.    FIELDS SEARCHED**

Minimum documentation searched (classification system followed by classification symbols)

C21D 9/46(2006.01); B21B 1/26(2006.01); C21D 8/02(2006.01); C22C 38/00(2006.01); C22C 38/06(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 냉연(cold rolled), 소둔(annealing), 회복(recovery), 결정립(grain)

**C.    DOCUMENTS CONSIDERED TO BE RELEVANT**

| Category* | Citation of document, with indication, where appropriate, of the relevant passages | Relevant to claim No. |
|---|---|---|
| X | KR 10-2011-0105403 A (JFE STEEL CORPORATION) 26 September 2011 (2011-09-26)<br>    See paragraphs [0064]-[0065] and [0082] and claims 1, 6, 10 and 14. | 1-9 |
| A | US 2014-0102604 A1 (THYSSENKRUPP STEEL USA, L.L.C.) 17 April 2014 (2014-04-17)<br>    See claims 1-6. | 1-9 |
| A | JP 2017-057462 A (NIPPON STEEL & SUMITOMO METAL) 23 March 2017 (2017-03-23)<br>    See claims 1 and 6. | 1-9 |
| A | KR 10-2004-0027981 A (NIPPON STEEL CORPORATION) 01 April 2004 (2004-04-01)<br>    See claims 14, 16, 19-20 and 25-26. | 1-9 |
| A | KR 10-2010-0106843 A (POSCO) 04 October 2010 (2010-10-04)<br>    See claim 3. | 1-9 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 April 2022** | **13 April 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2021/019101**

| Patent document cited in search report | | | Publication date (day/month/year) | Patent family member(s) | | | Publication date (day/month/year) |
|---|---|---|---|---|---|---|---|
| KR | 10-2011-0105403 | A | 26 September 2011 | CN | 102341519 | A | 01 February 2012 |
| | | | | CN | 102341519 | B | 18 February 2015 |
| | | | | EP | 2405026 | A1 | 11 January 2012 |
| | | | | EP | 2405026 | B1 | 28 November 2018 |
| | | | | ES | 2704707 | T3 | 19 March 2019 |
| | | | | JP | 2010-229545 | A | 14 October 2010 |
| | | | | JP | 5655300 | B2 | 21 January 2015 |
| | | | | KR | 10-1431316 | B1 | 20 August 2014 |
| | | | | KR | 10-1612593 | B1 | 15 April 2016 |
| | | | | KR | 10-2013-0101588 | A | 13 September 2013 |
| | | | | MY | 161077 | A | 14 April 2017 |
| | | | | PL | 2405026 | T3 | 28 June 2019 |
| | | | | US | 2011-0318217 | A1 | 29 December 2011 |
| | | | | WO | 2010-101074 | A1 | 10 September 2010 |
| US | 2014-0102604 | A1 | 17 April 2014 | WO | 2014-058938 | A1 | 17 April 2014 |
| JP | 2017-057462 | A | 23 March 2017 | JP | 6651759 | B2 | 19 February 2020 |
| KR | 10-2004-0027981 | A | 01 April 2004 | CN | 100549203 | C | 14 October 2009 |
| | | | | CN | 1547620 | A | 17 November 2004 |
| | | | | EP | 1431407 | A1 | 23 June 2004 |
| | | | | EP | 1431407 | B1 | 29 October 2014 |
| | | | | EP | 2415893 | A2 | 08 February 2012 |
| | | | | EP | 2415893 | A3 | 17 October 2012 |
| | | | | EP | 2415893 | B1 | 05 November 2014 |
| | | | | EP | 2415894 | A2 | 08 February 2012 |
| | | | | EP | 2415894 | A3 | 17 October 2012 |
| | | | | EP | 2415894 | B1 | 19 December 2018 |
| | | | | JP | 2003-064443 | A | 05 March 2003 |
| | | | | JP | 2003-064444 | A | 05 March 2003 |
| | | | | JP | 2004-052103 | A | 19 February 2004 |
| | | | | JP | 4041295 | B2 | 30 January 2008 |
| | | | | JP | 4041296 | B2 | 30 January 2008 |
| | | | | JP | 4171296 | B2 | 22 October 2008 |
| | | | | KR | 10-0548864 | B1 | 02 February 2006 |
| | | | | TW | 290177 | B | 21 November 2007 |
| | | | | US | 2004-0238081 | A1 | 02 December 2004 |
| | | | | US | 2008-0166257 | A1 | 10 July 2008 |
| | | | | US | 2008-0295924 | A1 | 04 December 2008 |
| | | | | US | 2008-0308200 | A1 | 18 December 2008 |
| | | | | US | 7534312 | B2 | 19 May 2009 |
| | | | | US | 7749343 | B2 | 06 July 2010 |
| | | | | US | 7776161 | B2 | 17 August 2010 |
| | | | | US | 8052807 | B2 | 08 November 2011 |
| | | | | WO | 03-018857 | A1 | 06 March 2003 |
| KR | 10-2010-0106843 | A | 04 October 2010 | None | | | |

Form PCT/ISA/210 (patent family annex) (July 2019)